# EUROPEAN PATENT APPLICATION

(11) **EP 1 592 079 A1**
(43) Date of publication of application: **02.11.2005**
(21) Application number: 05008756.8
(22) Date of filing: 21.04.2005
(51) Int. Cl.: H01M 8/02, H01M 8/04, F28F 1/20, F28F 1/02, F28F 21/06, F28D 1/053

(54) **Heat exchanger for fuel cell**

(30) Priority: 27.04.2004 JP 2004131780
(71) Applicant: DENSO CORPORATION, Kariya-city, Aichi-pref. 488-8661 (JP)
(72) Inventor: Sonoda, Yoshihiko, Kariya-city, Aichi-pref., 448-8661 (JP); Okochi, Takaki, Kariya-city, Aichi-pref., 448-8661 (JP)
(74) Representative: Klingseisen, Franz

(57) **Abstract**

A heat exchanger (100) for cooling a fuel cell (10) is provided with multiple fins (132), multiple tubes (131) which are laminated and separated from each other by the fin (132), and at least two tanks (110, 120) which are communicated with the tubes (131) at longitudinal-direction ends of the tubes (131). Cooling water is circulated to flow through the tubes (131), the tanks (110, 120) and the fuel cell (10). The tanks (110, 120) and the tubes (131) are made of resin, while the fins (132) are made of metal. Thus, cooling water which carries electricity can be electrically insulated from the externals by the tanks (110, 120) and the tubes (131), while the cooling capacity of the heat exchanger (100) can be satisfactorily maintained.

## Description

The present invention relates to a heat exchanger for cooling a fuel cell.

In general, referring to JP-2002-33108A, a fuel cell device is provided with a refrigerant cycle system, in which a radiator (heat exchanger for cooling) is arranged. Electrically insulating fluid (refrigerant), for example, fluorine-based inert liquid such as fluorinert of Sumitomo 3M or electrically insulating oil, is circulated in the refrigerant cycle system to flow through the fuel cell device and the radiator, so that the fuel cell device is cooled. The refrigerant passage, in which the electrically insulating refrigerant flows, of the refrigerant cycle system is electrically insulated from the fuel cell device. Therefore, the radiator is electrically insulated from the fuel cell device.

However, the electrically insulating refrigerant such as fluorinert has a lower heat transfer efficiency than general cooling water which is composed of water and ethylene glycol, so that the cooling capacity of the radiator is decreased. Moreover, the electrically insulating refrigerant is more expensive than general cooling water, thus increasing cost of the fuel cell device.

In the case where general cooling water is used as refrigerant of the refrigerant cycle system for the fuel cell device, the radiator is to be electrically insulating and made of an electrically insulating material, which has a lower heat transfer efficiency than the material (e.g., aluminum or copper) generally used to construct the radiator. Thus, the cooling capacity of the radiator will be lowered.

In view of the above-described disadvantages, it is an object of the present invention to provide a heat exchanger having a satisfactory cooling capacity for a fuel cell, which is electrically insulated from the heat exchanger without using an electrically insulating refrigerant.

According to the present invention, a heat exchanger for cooling a fuel cell is provided with multiple fins, multiple tubes where refrigerant flows, and at least two tanks which are communicated with the tubes at tube ends of a longitudinal direction of the tubes. The tubes are arranged in parallel with each other and separated from each other by the fin. The tanks and the tubes are made of a resin, while the fins are made of a metal.

Thus, the cooling capacity of the heat exchanger can be satisfactorily maintained, while cooling water which carries high voltage (electricity) due to electricity produced in the fuel cell can be insulated from the externals by the tanks and the tubes without using electrically insulating refrigerant.

The above and other objects, features and advantages of the present invention will become more apparent from the following detailed description made with reference to the accompanying drawings, in the drawings:
FIG. 1 is a schematic diagram showing a whole cooling system of a fuel cell according to a preferred embodiment of the present invention;
FIG. 2 is a front view showing a whole construction of a radiator according to the preferred embodiment;
FIG. 3 is a partially enlarged cross-sectional view showing a junction part between tubes and tanks according to the preferred embodiment;
FIG. 4 is a cross-sectional view showing the tube according to the preferred embodiment; and
FIGS. 5A and 5B are cross-sectional views showing tubes according to other embodiments of the present invention.

The preferred embodiment will be described with reference to the accompanying drawings.

### [PREFERRED EMBODIMENT]

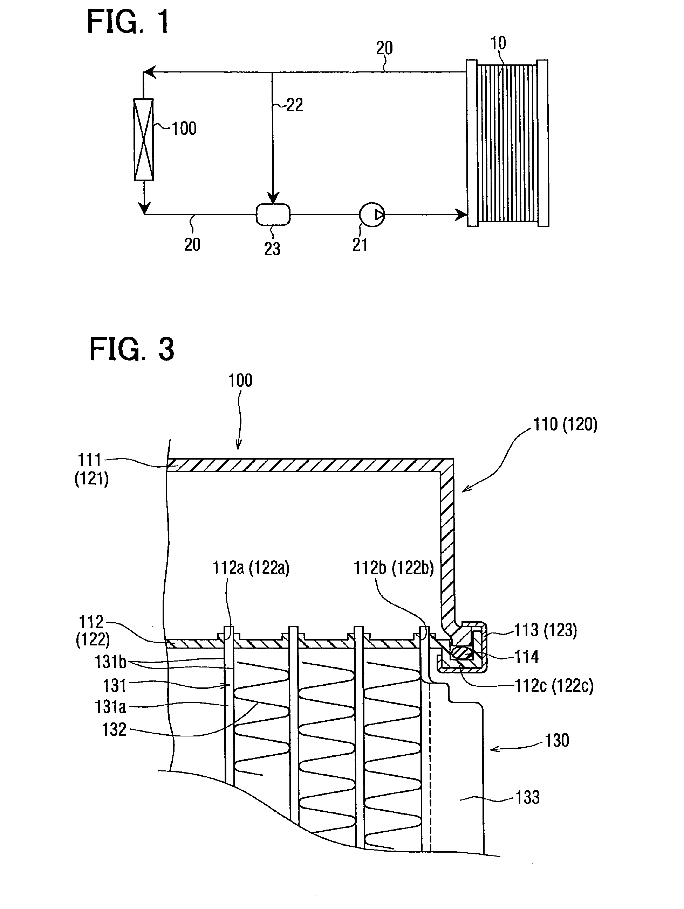

A preferred embodiment of the present invention will be described with reference to FIGS. 1-4. A heat exchanger (radiator 100) according to the present invention is suitably used to cool a fuel cell 10 by refrigerant (cooling water), which is circulated to flow through the fuel cell 10 and the radiator 100. The radiator 100 is mounted in, for example, a fuel-cell vehicle having a traveling motor which is driven by the fuel cell 10.

The fuel cell 10 generates electricity by a chemical reaction between hydrogen and oxygen. The fuel cell 10 is provided with a fuel cell stack and an exterior casing for accommodating the fuel cell stack therein. The fuel cell stack includes multiple cells which are connected with each other in series. Each of the cells is provided with a polyelectrolyte film which is sandwiched between a positive pole and a negative pole thereof.

As shown in FIG. 1, the fuel cell 10 is connected with (communicated with) a radiator passage 20 at the exterior casing. The radiator passage 20 is constructed of (formed by) an electrically insulating material, for example, a rubber (rubber hose). The radiator 100 and a water pump 21 are arranged in the radiator passage 20. Thus, cooling water in the radiator passage 20 is circulated by the water pump 21, to flow from the exterior casing of the fuel cell 10 through the radiator 100, as indicate by the arrow in FIG. 1. In this case, similarly to what is used in a gasoline-engine vehicle, cooling water is antifreeze composed of water and ethylene glycol.

Moreover, the radiator passage 20 is provided with a bypass passage 22 which is arranged in parallel with the radiator 100, so that cooling water can be adjusted by a passage switch valve 23 to flow through the bypass passage 22 and bypass the radiator 100. Similar to the radiator passage 20, the bypass passage 22 is made of a rubber (rubber hose).

The passage switch valve 23 is disposed at a junction part between the radiator passage 20 and the downstream side of the bypass passage 22. The passage switch valve 23 is controlled by a control device (not shown) to adjust amounts of cooling water flowing through the radiator 100 and the bypass passage 22.

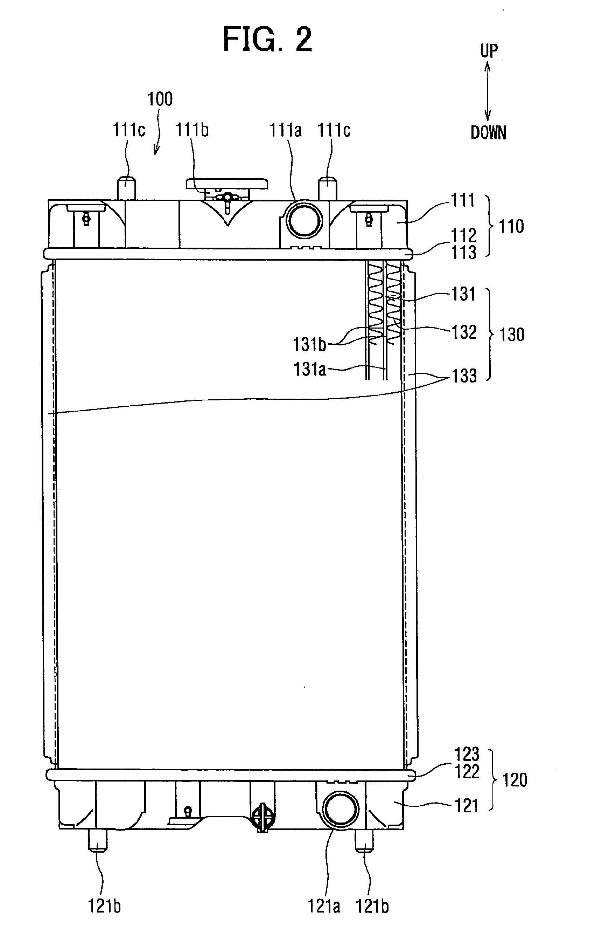

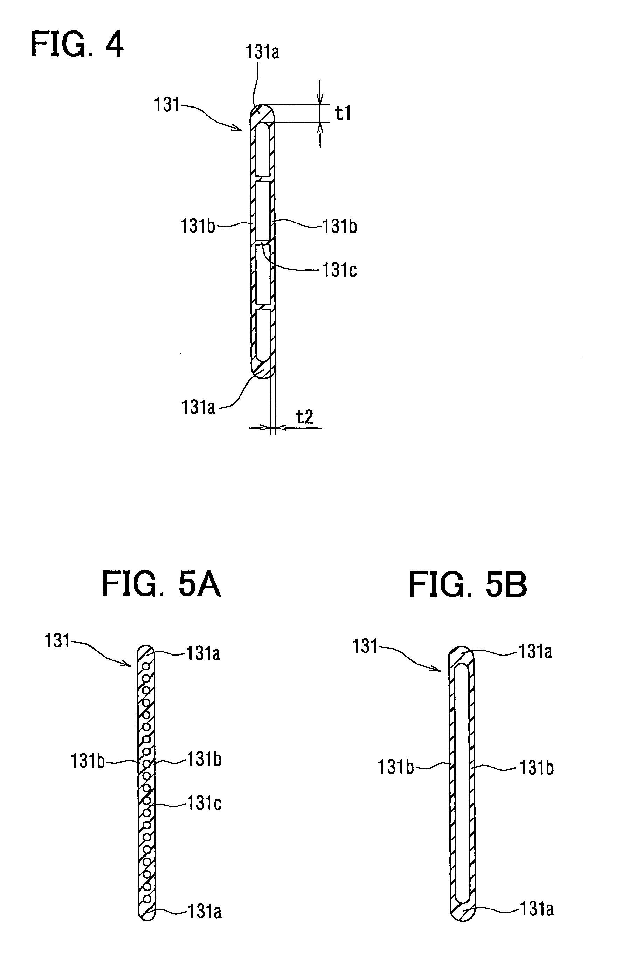

As shown in FIGS. 2 and 3, the radiator 100 includes an upper tank 110 (tank), a core portion 130 disposed at the lower side of the upper tank 110, a lower tank 120 (tank) arranged at the lower side of the core portion 130, and the like. The radiator 100 is a vertical-flow type, that is, cooling water in tubes 131 (described later) of the core portion 130 flows from the upper side to the lower side in FIGS. 2 and 3.

The upper tank 110 is made of a resin, and includes an upper body portion 111, an upper plate portion 112 and the like. Similarly, the lower tank 120, being made of a resin, includes a lower body portion 121, a lower plate portion 122 and the like. In this embodiment, polyphenylene sulfide (PPS) is used as the resin materials of the tanks 110 and 120, considering an excellent formability performance, a high strength and stiffness (suitable for construction of radiator 100), a satisfactory electrical insulation performance (suitable for use in fuel cell 10), and a high heat-withstanding capacity thereof.

Each of the upper and lower body portions 111, 121, is a container having an opening facing the upper plate portion 112 or the lower plate portion 122, that is, has an approximately U-shaped cross section (referring to FIG. 3).

As shown in FIG. 2, the upper body portion 111 is integrated with a pipe (inlet pipe) portion 111a, mounting portions 111c, and a water injection port 111b, through which cooling water is injected into the radiator 100. The lower body portion 121 is integrated with a pipe (outlet pipe) portion 121a, and mounting portions 121b. The radiator 100 is mounted at the vehicle through the mounting portions 111b and 121b.

Referring to FIG. 3, the upper plate portion 112 with a thin long plate shape is provided with multiple tube holes 112a which are arranged in parallel in the longitudinal direction of the upper plate portion 112, and side-plate holes 112b which are respectively arranged at the two longitudinal-direction ends of the upper plate portion 112. Moreover, the upper plate portion 112 is provided with a tank insertion portion 112c disposed at the periphery thereof. The opening-side end of the upper body portion 111 is inserted into the tank insertion portion 112c, while a seal packing 114 (seal unit) is arranged therebetween.

The outer surfaces of the opening-side end of the upper body portion 111 and the tank insertion portion 112c are engaged with a swaged plate 113 made of a metal, so that the upper body portion 111 is mechanically fastened on the upper plate portion 112.

Similarly, the lower plate portion 122, having a thin long plate shape, is provided with multiple tube holes 122a which are arranged in parallel in the longitudinal direction of the lower plate portion 122, and two side-plate holes 122b which are respectively arranged at the two longitudinal-direction ends of the lower plate portion 122. Moreover, the lower plate portion 122 is provided with a tank insertion portion 122c disposed at the periphery thereof. The opening-side end of the lower body portion 121 is inserted into the tank insertion portion 122c. Similarly, the seal packing 114 is also arranged between the opening-side end of the lower body portion 121 and the tank insertion portion 122c.

The outer surfaces of the opening-side end of the lower body portion 121 and the tank insertion portion 122c are engaged with a swaged plate 123 made of a metal, so that the lower body portion 121 is mechanically fastened on the lower plate portion 122.

The core portion 130 includes the multiple tubes 131 where cooling water flows, multiple fins 132, and side plates 133 (reinforcement member) having a cross section with an approximate '⊃' shape, referring to FIGS. 2 and 3. The tubes 131 are laminated in a lamination direction corresponding to the longitudinal direction of the upper plate portion 112 (lower plate portion 122). That is, the tubes 131 are arranged in parallel with each other.

Each of the fins 132 is formed by a thin band plate, to have a wave shape in the longitudinal direction (perpendicular to lamination direction of tubes 131) of the tube 131. The fins 132 are respectively arranged between the adjacent tubes 131, and at the outer sides of the outmost (lamination direction) tubes 131. The side plates 133 are separately disposed at the further outer sides of the outmost fins 132.

In this case, the two longitudinal-direction ends of each of the tubes 131 are separately engaged with (fixed to) the tube holes 112a and 122a of the upper and lower plate portions 112, 122, respectively. Similarly, the two longitudinal-direction ends of each of the side plates 133 are separately engaged with (fixed to) the side-plate hole 112b and 122b of the upper and lower plate portions 112, 122, respectively.

According to the present invention, the tubes 131 are made of a resin, while the fins 132 are made of a metal, for example, aluminum which has a high heat transfer performance. In this case, similar to the tanks 110 and 120, the tubes 131 are made of polyphenylene sulfide (PPS), which has the significantly higher electrical insulation performance than other resin material and is suitable for the tubes 131 constructing the core portion 130 (heat-radiation portion).

Further referring to FIG. 4, the tube 131 is formed to have two plane portions 131b, each of which is perpendicular to the lamination direction of the tubes 131 and contacts the fin 132 at the outer surface of the plane portion 131b. The tube 131 has a flat-shaped cross section, which is perpendicular to the up-down direction indicated in FIG. 2.

Two end portions 131a of the tube 131 of the longitudinal direction of the flat cross section have a thickness t1 (dimension of longitudinal direction of flat cross section), which is set to be larger than or equal to an approximate double of a thickness t2 (dimension of lateral direction of flat cross section) of the plane portion 131b. For example, the thickness t1 is set approximate 0.3mm so that the tube 131 has a higher strength, while the thickness t2 is set approximate 0.1mm so that heat can be satisfactorily radiated to the side of the fin 132.

Furthermore, the tube 131 is provided with multiple (e.g., three shown in FIG. 4) partition walls 131c (partition member), which are arranged inside the tube 131 and joined to the two plane portions 131b thereof. The thickness (dimension of longitudinal direction of flat cross section) of the partition wall 131c can be set approximately equal to the thickness t2 of the plane portion 131b.

In this case, each of the fins 132 is bonded to the adjacent tubes 131 (or side plate 133) by an adhesive, which is an epoxy resin material and beforehand applied to the outer surfaces of the tubes 131 (plane portion 131b) and the side plates 133. The two longitudinal-direction (up-down direction indicted in FIG. 2) ends of the tube 131 are respectively bonded to the inner surfaces of the tube holes 112a and 122a of the upper and lower plate portions 112, 122 by, for example, the same adhesive. Similarly to the tubes 131, the two up-down direction ends of the side plate 133 are respectively bonded to the inner surfaces of the side-plate holes 112b and 122b of the upper and lower plate portions 112 and 122.

The radiator 100 is connected with the radiator passage 20 through the pipe portions 111a and 121a. Thus, cooling water flows into the upper tank 110 from the pipe portion 111a, and passes through the tubes 131 of the core portion 130 to be collected in the lower tank 120. Then, cooling water is discharged out of the lower tan 120 through the pipe portion 121a.

Next, the effects of the radiator 100 with the above-described construction will be described.

In the fuel cell 10, electricity is generated by the chemical reaction between hydrogen and oxeye, which are respectively supplied for the positive and negative poles. As described above, the fuel cell 10 is connected to the radiator passage 20, in which cooling water is circulated. Thus, heat produced in the electricity generation can be radiated to cooling water, which is driven by the water pump 21 to flow through the radiator 100. Then, cooling water is cooled by radiating heat to outside air through the tubes 131 and the fins 132.

In the case where the amount of electricity generated by the fuel cell 10 is small so that relatively little heat is produced, cooling water will be adjusted by the passage switch valve 23 to flow through the bypass passage 22. Then, heat radiation of cooling water in the radiator 100 is restricted. Therefore, cooling water can be cooled to have a temperature equal to or lower than a predetermined value (for example, approximately 80°c). Accordingly, the operation temperature of the fuel cell 10 can be substantially maintained.

In this case, cooling water flowing through the fuel cell 10 will carry a high voltage, because electricity is generated in the fuel cell 10. According to the present invention, when cooling water having the high voltage passes through the radiator 100, cooling water is to be electrically insulated from the externals by the tanks 110, 120 and the tubes 131, which are made of the resin. Therefore, it is unnecessary to use electrically insulating refrigerant (which is expensive) in the radiator passage 20.

In the radiator 100, more than half of heat form cooling water will be radiated through the fins 132, which is made of the medal (aluminum) having a higher heat transfer performance than the resin material. Therefore, the cooling capacity of the radiator 100 can be satisfactorily maintained.

Moreover, according to the preferred embodiment, the tubes 131 are made of the resin, so that the weight and cost thereof can be reduced. Thus, a flow of flux and the like, which is melted in a brazing of metal tubes, into refrigerant (cooling water) can be prevented, so that a pollution of cooling water can be restricted.

Furthermore, the thickness t1 of the end portion 131a of the tube 131 of the longitudinal direction of the flat cross section thereof is set larger than the thickness t2 of the plane portion 131b thereof. Therefore, the end portion 131a of the tube 131 can have a high strength against both an interior pressure of cooling water flowing through the tube 131 and an exterior impact, for example, an impact from a stone (possible for vehicle where radiator 100 is mounted). Because the thickness t2 of the plane portion 131b is significantly small, the heat resistance thereof with respect to the side of the fin 132 can be lowered. Accordingly, the radiator 100 can be provided with both a substantial strength and a satisfactory cooling capacity.

Moreover, according to the preferred embodiment, the partition walls 131c are arranged in the tube 131, thus restricting the deformation of the plane portion 131b in the lateral direction of the flat cross section of the tube 131. Accordingly, the tubes 131 has a higher strength (pressure-withstanding strength) against the interior pressure from cooling water flowing therein.

Moreover, the inner space (cooling water passage) of the tube 131 is divided by the partition walls 131c into multiple parts having a smaller equivalent diameter, so that the heat transfer efficiency with respect to the side of cooling water is improved. Therefore, the heat radiation capacity of the radiator 100 is improved.

### [OTHER EMBODIMENTS]

The tube 131 can be also formed to have a different cross section from that described in the above-described preferred embodiment referring to FIG. 4.

For example, as shown in FIG. 5A, the tube 131 can be divided by a larger number of the partition walls 131c to have multiple passages therein, each of which has an approximately round-shaped cross section. Thus, the tube 131 can define the passages therein having a further smaller equivalent diameter, so that the heat transfer efficiency with respect to the side of cooling water can be further enhanced. Accordingly, the heat radiation capacity of the radiator 100 can be improved.

As shown in FIG. 5B, the partition walls 131c in the tube 131 can be omitted, so that the tube 131 has an appropriate (needed) strength and heat radiation capacity.

Moreover, the fin 132 can be also joined to the tube 131 by welding or the like, instead of bonding through the adhesive. In this case, for example, the fins 132 are assembled with the tubes 131, thereafter heated in a furnace to a predetermined temperature. Here, a vibration welding with an oscillator can be also used.

## Claims

1. A heat exchanger (100) for cooling a fuel cell (10), the heat exchanger (100) comprising:
a plurality of fins (132);
a plurality of tubes (131), in which refrigerant flows, the tubes (131) being arranged in parallel with each other and separated from each other by the fin (132); and
at least two tanks (110, 120) made of resin, the tank (110, 120) being communicated with the tubes (131) at tube ends of a longitudinal direction of the tubes (131), **characterized in that**:
the tubes (131) are made of resin; and
the fins (132) are made of metal.

2. The heat exchanger (100) according to claim 1, wherein:
the tube (131) has a flat cross section which is perpendicular to the longitudinal direction of the tube (131); and
the tube (131) includes end portions (131a) of a longitudinal direction of the flat cross section and plane portions (131b) which are perpendicular to a lateral direction of the flat cross section, the end portion (131a) having a larger thickness (t1) than a thickness (t2) of the plane portion (131b).

3. The heat exchanger (100) according to claim 2, wherein
the tube (131) has at least one partition member (131c) disposed therein and connected with the plane portions (131b) of the tube (131).

4. The heat exchanger (100) according to any one of claims 1-3, wherein
the fin (132) is joined to the tube (131) by one of bonding and welding.

5. The heat exchanger (100) according to any one of claims 1-4, wherein
the tubes (131) and the tanks (110, 120) are made of polyphenylene sulfide.

6. The heat exchanger (100) according to any one of claims 1-5, wherein
the fins (132) are made of aluminum.

7. The heat exchanger (100) according to any one of claims 1-6, wherein
the refrigerant is cooling water composed of ethylene glycol and water.

8. The heat exchanger (100) according to claim 2 or 3, wherein
the thickness (t1) of the end portion (131a) is larger than an approximate double of the thickness (t2) of the plane portion (131b).
